(19) Europäisches Patentamt

European Patent Office

Office européen des brevets

(11) **EP 0 514 459 B1**

(12) **EUROPEAN PATENT SPECIFICATION**

(45) Date of publication and mention
of the grant of the patent:
**14.04.2004 Bulletin 2004/16**

(51) Int Cl.⁷: **C08G 18/06**, C08G 18/10,
C08G 18/42, C08G 18/44,
C08J 5/12

(21) Application number: **91904246.5**

(22) Date of filing: **04.02.1991**

(86) International application number:
**PCT/US1991/000742**

(87) International publication number:
**WO 1991/011476 (08.08.1991 Gazette 1991/18)**

(54) **THERMALLY-REVERSIBLE ISOCYANATE POLYMERS**

THERMOREVERSIBLE ISOCYANAT-POLYMERE

POLYMERES D'ISOCYANATE THERMOREVERSIBLES

(84) Designated Contracting States:
**AT BE CH DE DK ES FR GB GR IT LI LU NL SE**

(30) Priority: **05.02.1990 US 475112**

(43) Date of publication of application:
**25.11.1992 Bulletin 1992/48**

(73) Proprietor: **BATTELLE MEMORIAL INSTITUTE**
**Columbus Ohio 43201-2693 (US)**

(72) Inventors:
• **MARKLE, Richard, A.**
**Columbus, OH 43221 (US)**
• **BRUSKY, Phyllis, L.**
**Columbus, OH 43214 (US)**
• **CREMEANS, George, E.**
**Groveport, OH 43125 (US)**

(74) Representative:
**Winter, Brandl, Fürniss, Hübner, Röss, Kaiser,**
**Polte Partnerschaft**
**Patent- und Rechtsanwaltskanzlei**
**Alois-Steinecker-Strasse 22**
**85354 Freising (DE)**

(56) References cited:
GB-A- 2 108 137          GB-A- 2 123 841
US-A- 3 503 927          US-A- 3 684 769
US-A- 4 201 853

**Description**

FIELD OF THE INVENTION

This invention relates generally to polymer compositions that are found by reacting isocyanate and labile-hydrogen functionality. More particular the invention relates to thermally reversible polymer compositions that are capable of thermally dissociating into the reactant isocyanate and labile hydrogen. Such thermally-reversible isocyanate-based polymer compositions are useful, among other things, as coatings, hot-melt adhesives, moldings, in reaction injection molding applications and in composite or laminate fabrication.

BACKGROUND OF THE INVENTION

organic polyisocyanates have been used as lacquers, films, coatings and hot-melt adhesives. Since isocyanate compounds are very reactive toward groups with an 'active hydrogen such as hydroxyl, carboxyl, amine and the like, it is common to control such reactivity by adding a mono-blocking or masking agent to the isocyanate (U.S. 3,115,479 to Windermuth et al.) and then reacting the blocked isocyanate with a polyester containing free hydroxyl groups by heating the mixture to deblock the isocyanate.

As seen in U.S. 2,777,881, it is possible to avoid the use of blocking agents by limiting the amount of isocyanate reacted with terminal labile hydrogen groups of a polyester or polyesteramide so as to afford a material that is in an uncured state. Additional isocyanate groups then are added to the uncured product so that a subsequent irreversible cross-linking reaction with moisture can take place to produce the final cured state with appropriate physical properties.

Another solution that avoids premature introduction of moisture into the product is to use a packaging system to protect the isocyanate from moisture prior to use. Adhesives Age, September 1987, p. 42-43.

U.S. 4,166,873 to Gilliam et al discloses improved hot melt adhesives and coatings formed by adding diisocyanate to polyesters. The inventors note that the incorporation of isocyanate into the polyester molecules does not involve chain-extension or significant cross-linking. U.S. 2,982,754 to Sheffer et al. and U.S. 2,876,725 to Buck at al. (example 4) contain additional examples of polyesters modified by the addition of isocyanates.

U.S. 3,684,769 to Abbott et al. pertains to thermally reversible polyester or polyether urethane polymers with thermally reversible urethane links between polymer chains. U.S. 4,201,853 to Henry et al reveals a thermally-reversible polymeric binder for plastic bonded explosives that reversibly dissociated below 150 °C. Wagener and Muria, Polymer Preprints, Vol. 30, No. 1, April 1989 disclose monomeric thermally reversible urethanes whose molecular weight is a function of temperature. Although a polyurethane was prepared, no discussion or data on polymer urethane bond reversibility are given nor are suggestions made as to its applicability.

U.S. 4,608,418 to Czerwinski et al. illustrates an attempt to improve the performance of conventional isocyanate materials by adding a reactive plasticizer to a hot-melt composition formed from a mixture of one or more polyisocyanates and one or more hydroxyl terminated polyols and one or more chain extenders.

Prior-art isocyanate-based polymers have been low molecular weight isocyanate compositions that afford good working properties, e.g., application ease, surface wettability and penetration, leveling ability, and gap-filling capacity. Such materials are commonly moisture-cured to form substituted polyureas after being applied to give durable coating or adhesive materials. However, such materials do not have the high performance characteristics of some of the more costly high-performance polymers such as the polyimides. Typically as one attempts to improve the performance characteristics of the isocyanate-based materials using conventional techniques, high-viscosity and associated low wettability result in a loss of substrate bonding ability. currently conventional isocyanate polymers do not allow for the high temperature processing, e.g., soldering and thermoforming, of flexible circuit boards and other components such as chips, transformers and motors. Conventional isocyanate polymers typically do not provide cracking resistance at high end-use operating temperatures such as found in high performance aircraft, automotive and computer equipment. The processibility of high performance materials such as polyimides that are used in high performance protective dielectric film or coating materials is more limited than desired. A need continues to exist for a better, melt-processible, high-performance material such as a polyimide for molding applications.

EP-A-439 264 discloses RIM polyurea-co-polyurethanes including the use of polycarbonate polyols. This known composition includes obligatorily amine terminated polyether of relative high molecular weight thereby leading to urea bonds. However, a free flowing melt cannot be automatically obtained.

SUMMARY OF THE INVENTION

This invention meets these needs and solves many of these problems by preparing a stable, melt-processable, high-temperature poly- urethane polymer composition, comprising:

(A) a labile-hydrogen functionality segment selected from the group consisting of oligomeric aromatic carbonates and oligomeric aromatic esters with phenolic hydroxyl end group functionalities having labile hydrogen end groups and with a degree of polymerization of 1-20 and

(B) an isocyanate functionality segment selected from the group consisting of: oligomeric aromatic, aliphatic, cycloaliphatic or aralkyl polyisocyanate containing from 6 to 100 carbon atoms having reactive isocyanate end groups;

wherein said labile-hydrogen segment and said isocyanate segment are linked by a thermally- reversible, isocyanate-labile urethane bond hydrogen backbone linkage, and wherein said linkage has the characteristic of dissociating only above 150°C into said labile-hydrogen segment and said isocyanate segment as a free flowing melt.

According to a preferred embodiment of the present invention the melt-processable polymer composition further comprises

(C) a toughening aliphatic prepolymer backbone group having a labile-hydrogen segment which provides ambient or low-temperature flexibility and toughness to the final polymer composition characterized as a polyol, a polycaprolactone diol, a polytetramethylene ether glycol, a polyaliphatic carbonate diol, a hydroxy-ended aliphatic polyester, or a saturated hydroxy-ended phthalic acid-based polyester.

The present invention further discloses and claims the use of the new polymer composition as a hot melt adhesive.

Finally a process for forming said polymer composition is disclosed and claimed, which comprises reacting a first compound with isocyanate functionality as defined under (B) above with a second compound with a labile-hydrogen functionality as defined under (A) above.

Further preferred embodiments are claimed in the subclaims.

Generally both aromatic and aliphatic isocyanate and labile-hydrogen functionality form urethane or other bonds that are reversible at some elevated temperature. Typically this temperature is significantly higher for the aliphatic product than for the aromatic product. Intermediate reversing temperatures can be achieved by using a mixed aliphatic and aromatic product. When high performance polymers are desired, an isocyanate containing a poly(parabanic acid) linkage may be used.

Often it is desireable to block the isocyanate functionality prior to its reaction with the labile hydrogen functionality so as to prevent unwanted irreversible reactions with moisture and other reactive hydrogen contaminants. As a result, improved handling and stability of the isocyanate functionality is obtained. By using a volatile blocking agent such as phenol, the blocked isocyanate can be reacted with the labile hydrogen functionality by heating the two reactants so as unblock the isocyanate by vaporizing the phenol leaving the unblocked isocyanate to react with the labile hydrogen functionality.

By controlling the stoichiometry of the reactant labile-hydrogen functionality and the isocyanate functionality, it is possible to obtain a polymer with isocyanate end groups. By using a nonvolatile blocking group in the correct stoichiometry, it is possible to control the reactivity and characteristics of the final polymer product. Provided there are no interfering reactions with the nonvolatile blocking group, it may be added at any stage of the reaction sequence.

Various characteristics may be incorporated into the polymer composition by using oligomers with specific properties. For example, aromatic polycarbonates may be used to provide inherent toughness and impact resistance. By controlling the degree of polymerization of an aromatic polyester oligomer, a melt liquid crystal (lyotropic) property can be obtained. Such a liquid crystal property provides solid state anchoring or "virtual crosslinks" so as to minimize the number of actual three dimensional covalent crosslinks that need to be used. Polyimides are used to provide high melting and lyotropic features. Polyphenylene sulfides have exceptional strength and rigid, heat stable polymer chains that provide improved hardness, toughness, and solvent resistance to the polymer composition. Although hydroxyl end groups are preferably used as the active or labile-hydrogen end groups, other end groups such as amines, oximes, triazoles, imidazoles and imidazolines may also be used.

To provide ambient or low temperature flexibility and toughness, flexible aliphatic polyester, polyether or polycarbonate prepolymers can be included in the polymer composition. For example, polyesters formed from adipic or sebacic acid, dimer acids, $\alpha,\omega$-butane, pentane or hexane diols, hydrogenated (saturated) phthalic acids, other simple diols and polyglycols such as polypropylene glycols can be used.

Melt reversibility is enhanced by incorporating ionic functionality into the polymer composition that is capable of forming thermally-reversible ionic bonds. Typically such thermally-reversible ionic functionality can be achieved by using a functionality such as an aliphatic carboxylate, sulfonate, or phosphonate that is capable of forming ionic bonds with preferably a multivalent cation such as zinc, magnesium, calcium or nickel.

BRIEF DESCRIPTION OF THE DRAWINGS

FIGS. 1-5 are Rheometric plots of the dynamic viscosity $\eta^*$, in poise, the storage shear modulus G', and the loss shear modulus G" determined as a function of temperature (oscillation mode) using a Rheometrics Dynamic Mechanical Spectrometer RMS 605.

FIG. 1 shows data from -50 °C to 100 °C for composition H-a after about 10 minutes mixing at 200-210 °C.

FIG. 2 shows data from 100 °C to 200 °C for composition H-a after about 10 minutes mixing at 200-210 °C.

FIG. 3 shows data from 100 °C to 220 °C for composition H-b (tin catalyst added) after about 10 minutes mixing at 200-210 °C.

FIG. 4 shows data from 100 °C to 220 °C for composition J after 25 minutes mixing at 200-210 °C.

FIG. 5 shows data from 100 °C to 220 °C for composition J after 75 minutes mixing at 200-210 °C.

DETAILED DESCRIPTION OF THE INVENTION AND BEST MODE FOR CARRYING OUT THE PREFERRED EMBODIMENT

The benefits and potential benefits of the thermally-reversible polymer composition arise from the basic property of this invention, that is, the ability of the polymer composition to thermally dissociate into its reactant isocyanate and labile-hydrogen functionalities. This basic property allows the composition to flow at a comparatively low temperature while exhibiting high strength, good surface adhesion, low temperature flexibility, relatively fast development of strength, relatively good solvent resistance, good tear resistance, good impact resistance, and high abrasion resistance.

Generally the formation of the compositions of this invention requires reacting high performance oligomers possessing appropriate reactive end groups, i.e., isocyanate and labile-hydrogen functionality capable of forming a isocyanate-labile hydrogen based linkage that is capable of thermal dissociation into the starting materials. Essentially stoichiometric amounts of isocyanate and labile-hydrogen functionality are used.

Two types of structures are prepared. One consists of linear isocyanate-labile hydrogen based linkage in which no trifunctional isocyanates (or labile-hydrogens) are used. Such polymeric compositions have "virtual crosslinks," i.e., crystalline aggregates that act like crosslink sites, based on liquid crystal oligomers. The second type of polymeric composition is a crosslinked isocyanate-labile hydrogen based linkage based on a combination of a diisocyanate-labile hydrogen linear linkage and preferably a component of triisocyanate or a tris-labile hydrogen or both. Both types of structures may also contain ionic functionality capable of forming thermally-reversible ionic bonds.

The thermally-reversible polymer compositions may also be considered as having three building blocks: 1) an isocyanate linking group, 2) a high performance aromatic oligomer backbone group, and 3) a toughening aliphatic prepolymer backbone group.

The isocyanate linking group includes the trifunctional isocyanate crosslinker that is preferably reacted only with the aromatic oligomer backbone group. Various balanced stoichiometry combinations of these three sequences can be combined to produce thermally-reversible polymer compositions that are crosslinked to a controlled extent with aromatic isocyanate-labile hydrogen linkages, or are not covalently crosslinked, but depend on "virtual" crystalline polymer crosslinks for high performance.

Polyisocyanate reactants used in this invention include aromatic, aliphatic, cycloaliphatic or aralkyl polyisocyanates containing from about 6 to 100 carbon atoms. When a linear composition is sought, the polyisocyanate functionality should be about 2. The following polyisocyanates are expected to be useful: 1) aromatic isocyanates and prepolymers based on the following materials: 4,4'-diphenyl methane diisocyanate (MDI), 4,4',4"-triphenyl methane triisocyanate, 1,4-phenylene, diisocyanate (DPDI), 1,3-phenylene diisocyanate, xylene diisocyanates such as 5,6-dimethyl-1,3-phenylenediisocyanate and 2,4-dimethyl-1,3-phenylenediisocyanate and other aromatic isocyanates based on other backbones such as naphthalene and 2) aliphatic isocyanates and prepolymers based on the following representative materials: 1,3-cyclohexylene diisocyanate, 4,4'-methylene-bis(cyclohexylisocyanate). A wide variety of polyisocyanates are known in the art as shown in, for example, U.S. 4,608,418 to Czerwinski et al., which is hereby incorporated herein by reference.

The high-performance oligomer backbone group includes polycarbonates and aromatic polyesters with phenolic hydroxyl end-group functionalities. Generally a labile-hydrogen functionality of about two is preferred.

The polycarbonates can be prepared from bisphenol A and phosgene in a suitable organic solvent using a controlled excess of bisphenol A to produce phenolic hydroxyl end groups. Suitable polycarbonates include those based on or containing in addition to bisphenol A, bisphenol F, 4,4'-dihydroxybenzophenone, 4,4'-dihydroxydiphenylsulfone, hydroquinone, resorcinol, phenolphthalein or 4,4'-biphenol.

Aromatic polyester oligomers are based, for example, on 4- and 3- hydroxybenzoic acid, hydroquinone, resorcinol, 4,4'-biphenol, terephthalic acid, isophthalic acid and the 1,5-disubstituted naphthalenes, in which both groups are either hydroxyl or carboxyl, or one is hydroxyl and the other is carboxyl. The phenol (aromatic hydroxyl) groups are present in the reaction mixture, for example, a melt, predominantly in the form of the acetate ester obtained by reaction with acetic anhydride. Generally about half of the oligomer will contain 4-hydroxybenzoic acid derived moieties. The remainder can be derived from any of the other monomers, so long as the reaction mixture composition is such that the acetoxy and hydroxy to carboxylic acid group ratio will result in a hydroxy-terminated oligomer with a degree of polymerization in the range of 1-20 and more preferably in the range of 1-10. Further the monomer mixture must be selected so that the oligomer will be obtainable as a melt under an inert atmosphere such as nitrogen or argon at temperatures that can be varied between about 200°C and an upper temperature at which essentially no thermal degradation occurs, i.e., about 300°C or above.

Toughening prepolymers provide ambient or low temperature flexibility and toughness to the final polymer composition. A wide variety of flexible prepolymer materials may be used including polycaprolactone diols such as Union Carbide PCP, polytetramethylene ether glycols such as Du Pont Teracol and polyaliphatic carbonate diols such as PPG Duracarb. Other toughening prepolymers include hydroxy-ended aliphatic polyesters such as adipic acid or sebacic acid polyesters with $\alpha,\omega$,-butane, pentane or hexane diols, saturated phthalic acid-based polyesters (long, or non-drying alkyds) with any of the simple diols and simple polyether glycols such as polypropylene glycols.

Additives as are commonly added to polyurethane products such as antioxidants, UV stabilizers, colorants, fillers, etc., can be added to the polymer composition of the present invention in conventional amounts.

The polymer composition of this invention can be coated onto a suitable substrate by applying such composition to the substrate and then heating the covered substrate to a temperature sufficient to form a bond. Operative methods for covering a surface include powder coating and applying a film to the substrate. In powder coating, the composition is ground into a powder with particle sizes less than about 250 microns and applied to a substrate either by electrostatic spray or by fluidized bed. The covered substrate then can be baked at a temperature sufficient to form a uniform fused coating bonded to the substrate. In another method, a film of the polymer material can be placed on the substrate and then baked. Alternatively, the thermally reversible material can be applied to a heated substrate such that bonding occurs as the material is applied to the substrate. When used as a hot melt adhesive, the polymer composition can be applied between two substrates and the two substrates heated to form a bond. Alternatively the polymer composition can be applied to at least one heated substrate followed by pressing the second substrate to the first. When thermal conductivity is not a significant factor, the heated polymer components can be applied without substrate heating.

One of the objects of this invention was to prepare polyurethane polymer compositions based on aromatic diisocyanates that provide a good balance of easy melt processibility, especially at higher temperatures where aromatic urethane bond reversibility occurs, and excellent physical properties over a broad temperature range. For example, it was desired to obtain good adhesive strength at temperatures of 120-150 °C or higher. Aromatic ester and polycarbonate diol oligomers that melt at temperatures ≥180 °C and have the potential to provide such properties have been designed and synthesized.

Polycarbonate oligomers were prepared and are represented by the acronym sequence DP1-C-[DP2-C]$_n$DP1 where DP1 is an aromatic diphenol, C is carbonate functionality, DP2 is selected from the group of diphenols consisting of aromatic diphenols that may be the same as DP1 and aromatic-aliphatic diphenols and wherein C is carbonate functionality derived from a carbonyl and the oxygen moiety on seperate phenol units of DP1 and DP2 and n is about 1-20.

Phenolic hydroxy terminated polyesters of aromatic or aliphtic esters were prepared and are represented by the acronym sequence PH-[DHA-DAH]$_n$-DHA-PH where PH is a phenolic acid ester segment, DHA is an aromatic or aliphatic dihydroxy or di acid ester group or a mixed hydroxy and acid ester segment, HDA is an aromatic diacid ester or dihydroxy or mixed hydroxy and acid ester segment selected so that DHA and DAH combine to be linked by an ester functionality, PH combines with the terminal group of the DHA-DAH sequence to form an ester functionality and n is about 1-20. It is to be understood that various combinations of reactants can be used to obtain the ester functionality such as the reaction of an acid with a hydroxy group and that such combinations are considered as equivalents to the above described sequence.

Preparation of the bis-hydroquinone ester of isophthalic acid (HQ/IPA/HQ) and a polycarbonate (PC) oligomer are described in the attached experimental procedures. The aromatic ester oligomers were designed to provide strength, stiffness (high modulus) and temperature resistance. The polycarbonate oligomers were designed to provide strength and broad temperature range toughness. The differential scanning calorimetry (DSC) melting points of the oligomers are summarized in Table 1.

To further moderate flexibility and toughness, especially at low temperature, low melting aliphatic polyester polyols were utilized. Finally crosslinking was introduced by selective incorporation of aromatic triisocyanates or aliphatic triols. The latter would function by providing internal aromatic triisocyanate production. The aromatic urethane crosslinks were designed to provide enhanced strength, resistance to creep under stress and solvent/chemical resistance. Yet at elevated temperatures, these bonds reverse allowing the composition to be more readily melt processed. Overall compositions with relatively low melt viscosity at high temperature (e.g., 500-10,000 poise at 200 °C) and excellent or superior strength, toughness and solvent resistance at lower temperatures (from about -40 °C to about 120 °C) are provided.

These polymers are useful as hot melt adhesives, coatings, melt processable polymers for part fabrication (injection, transfer, other thermoplastic processes), composite fabrication by melt impregnation, prepregging followed by thermal forming, pultrusion, and so on.

Adhesive component materials and their equivalent weights are listed in Table 2. Adhesive samples were hand mixed by adding the polyol components to a 180cc electrolytic (deep) beaker and melting/stirring under an argon flush using a Wood's metal bath set at 180 to 220 °C (Table 3). The preparation of composition C (Example 9) is described as an example for all preparations. The melt mixing was done at ~180 °C when no polycarbonate oligomer (Example 6, degree of polymerization (DP9), bisphenol A/phosgene oligomer with phenol end groups) was used. However, the mix had to be heated to ~210 °C to comelt the polycarbonate oligomer. A stainless steel spatula was used. Once comelted, all the polyol mixtures were clear, easily stirred melts.

The resulting melts were then cooled to about 100 °C and the isocyanate components added, then the mixture heated to higher temperatures, e.g., 150-210 °C as needed, to provide a melt with acceptable viscosity. The amount of isocyanate was adjusted so that the equivalents of OH and NCO groups were essentially equal in each case. Hence high molecular weight mixed aliphatic-aromatic polyurethanes were formed on completion of reaction between the OH and NCO groups. An end capper (p-phenyl phenol) that is relatively nonvolatile (b.p. >300 °C) was added in the range of 0.1 to 0.05 equivalents to limit linear polyurethane molecular weight to ~100,000±50,000 and provide stabilized, nonfunctional polymer chain ends.

In some cases (Compositions A-E; Table 3), only linear polymers were expected since only difunctional polymer building units were used. In the remaining compositions (F-K), trifunctional aromatic isocyanates (CB75) or a triol (TMP) that results in in-situ aromatic triisocyanate formation were used. Hence these compositions are crosslinked below their melting points. Therefore the actual molecular weights depend on the purity and the degree of difunctionality of the difunctional components, the extent of end capping by p-phenyl phenol, the degree of crosslinking, and the degree of dissociation (or reversal) of the urethane bonds. The last two factors depend greatly on the temperature.

The thermal transitions for the compositions were determined by differential scanning calorimetry (DSC). These data are listed in Table 4. All the compositions have a second order (glass) transition temperature at ~ 44-49 °C. They show very broad melting transitions starting at temperatures ranging from as low as about 135 °C to about 181 °C They all show complete melting between about 192 °C and 227 °C.

The compositions containing crosslinkers (samples F-K) show a moderate shift upward in initial melting point (~10-25 °C). When a tin catalyst (dibutyl tin dilaurate, 0.1 weight percent) is added to a composition, a further modest increase in initial melting point (~30 degrees, composition H-b vs H-a) is observed. Clearly the compositions containing crosslinking groups are thermally reversed to the noncrosslinked state above their melting temperatures.

At ambient temperature, compositions A-E are readily soluble in N-methyl pyrrolidone (NMP). Composition F (1 equivalent percent isocyanate crosslinker) showed very slight evidence of crosslinking (very small amount of highly swollen gel in NMP). Compositions G-K (~10 equivalent percent isocyanate crosslinking groups) did not dissolve in NMP. Rather a slightly to moderately swollen gel was observed in NMP. Hence these compositions are rather thoroughly crosslinked at this temperature. The gels swelled considerably more upon heating to 100 °C but still did not dissolve. At ~120-130 °C, the gels began to break up and solubilize.

The dynamic (oscillatory) rheologic response of selected compositions was determined using the Rheometrics Dynamic Mechanical Spectrometer RMS 605. The dynamic viscosity (R) or $\eta^*$ (poise), the loss shear modulus G" [dyne/cm$^2$] and the storage modulus G' [dyne/cm$^2$] were determined as a function of temperature. The viscosity and storage shear modulus should be greater than about $10^6$ for useful physical strength to be observed. The viscosity should be less than about 10,000 poise for reasonable melt processability. Hot melt adhesive application is best in the 5-500 poise range. The most desirable viscosity will depend on several factors including, but not limited to, the method of hot melt application, the nature of the surfaces to be bonded, and their temperatures.

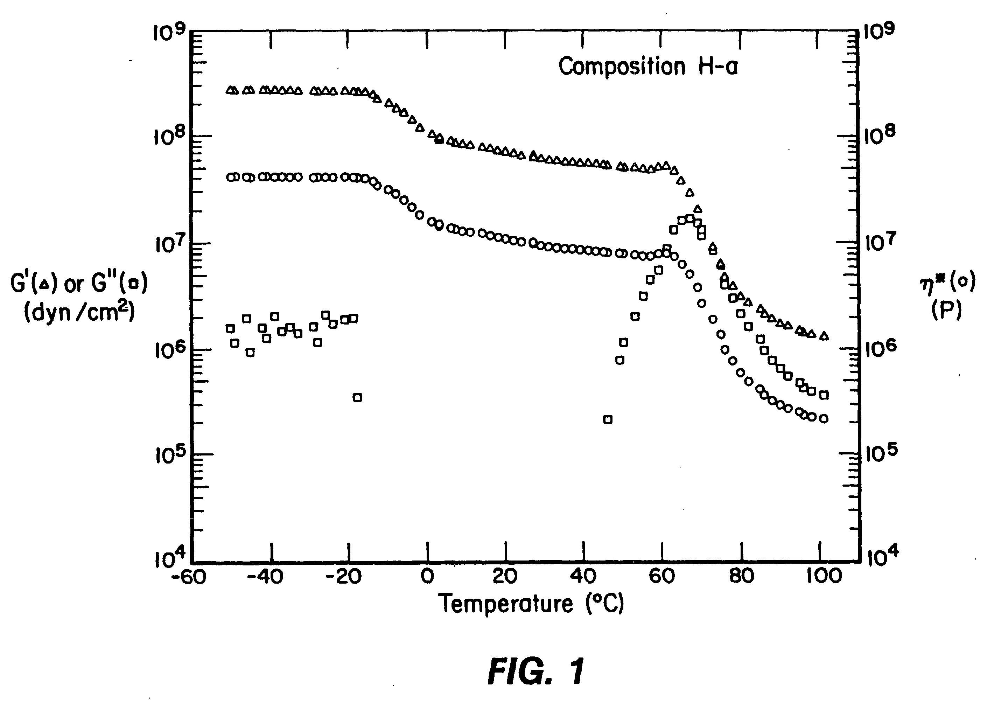

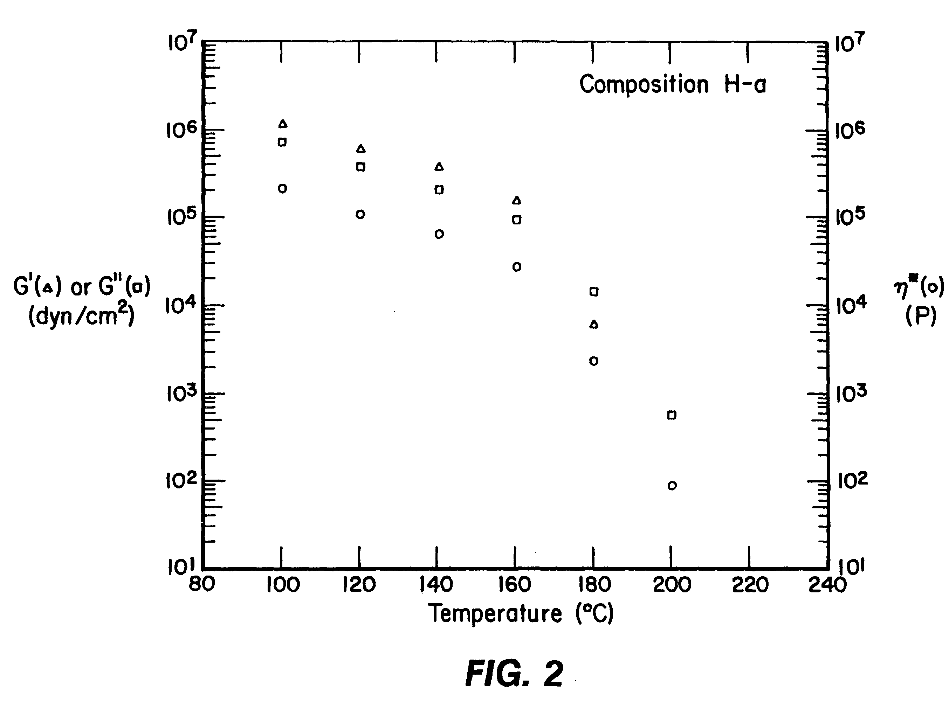

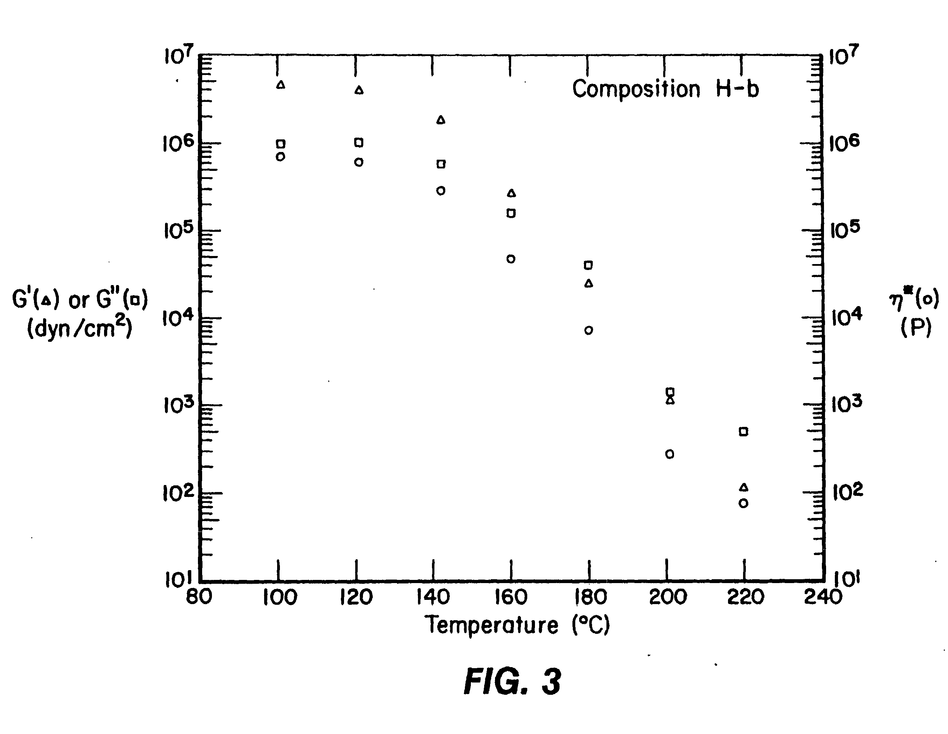

Composition H (actually H-a) and its replicate (J) exhibit these characteristics well and show excellent adhesive properties (described below). The rheometrics curves for H-a (FIG. 2) and H-b (FIG. 3; with a tin catalyst) were measured after about 10 minutes mixing at about 200-210 °C. Composition J (H-a replicate) was measured after mixing 25 and 75 minutes at 220 °C. The rheometric plots are shown in FIGS. 1-5.

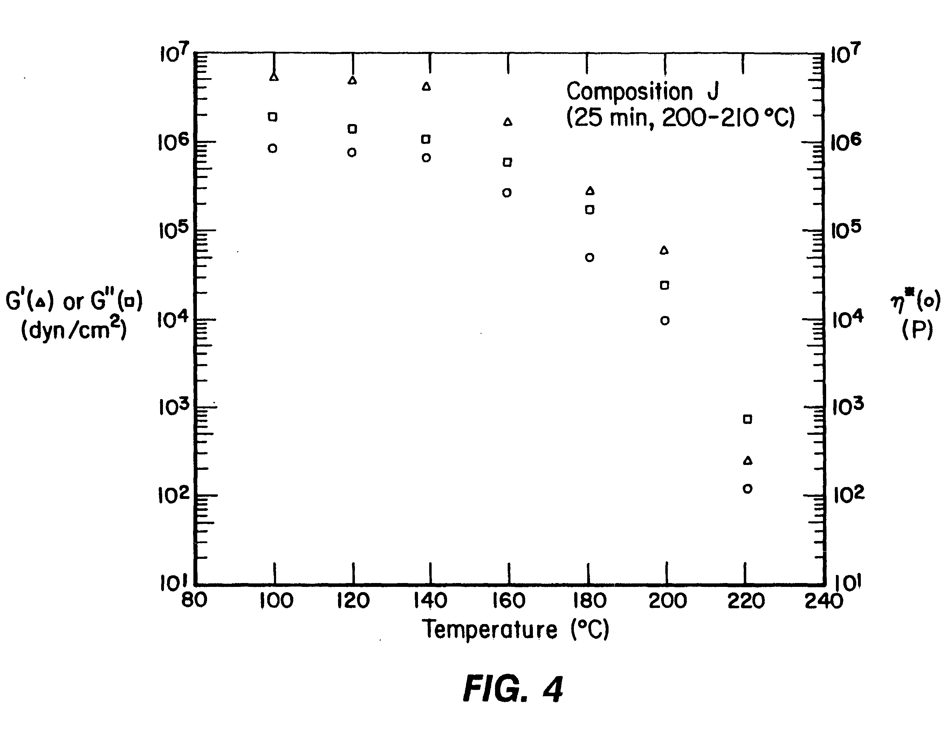

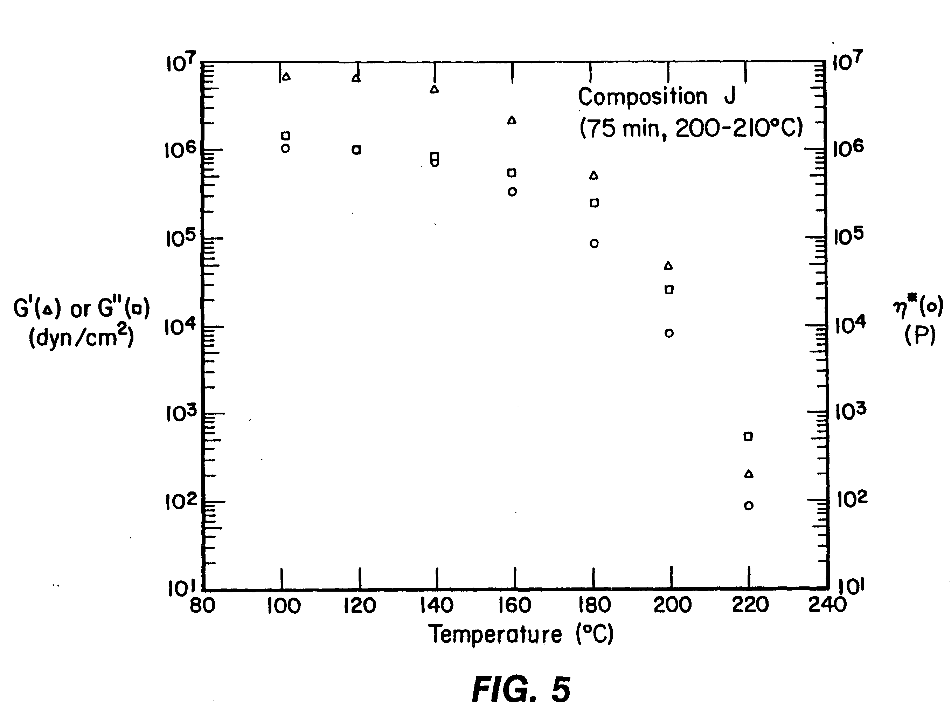

The compositions represented by H-a and J had a viscosity of about 2000 poise at 180 °C and 90 poise at 200 °C after 15 minutes (FIG. 2). This increased to about 10,000 poise at 200 °C (100 poise at 220 °C) after 25 minutes (FIG. 4). It was measured as 8,000 poise at 200 °C (90 poise at 220 °C) after 75 minutes (FIG. 5). Hence it was essentially unchanged between 25 and 75 minutes. Composition H-b showed greater viscosity at 10-15 minutes than H-a but less than J at 25 minutes. The shape of the curve indicates that the tin catalyst serves to speed up the thermal process but not change it. It is believed that the leveling off of the dynamic rheological parameter between 25-75 minutes indicates that equilibrium molecular weight for 210-220 °C is reached and maintained. Hence a reproducible viscosity processing characteristic composition is obtained during this period.

Composition H-a was also measured by dynamic oscillatory mechanical spectrometry from -50 °C to 100 °C (FIG. 1) as well as from 100 °C to 200 °C (FIG. 2). The storage shear modulus (G") decreased rather sharply (from $\sim$ 3 x $10^8$ to 1 x $10^8$ dyne/cm$^2$) over the temperature range from about -15 °C to about 3 °C (transition range, centered at about 6 °C). It then decreased quite slowly (semi-plateaued) to about 60 °C. It then showed a sharper decrease or transition (from about $5x10^7$ to about $1.5x10^6$ dyne/cm$^2$) over the 60-80 °C range. It then decreased slowly again (semi-plateaued) from about $1.5x10^6$ to $4x10^5$ dyne/cm$^2$ over the temperature range from about 80°C to about 130-140°C. It then began to decrease more rapidly to a very low value or near zero by 200°C.

The behavior of both the storage and the loss shear modulus from -50 to 60 °C is indicative of a very tough, resilient composition. Values in the range of $10^8$-$10^9$ dyne/cm$^2$ for the storage shear modulus are considered very good for mechanical performance (e.g. an adhesive under load), especially in resistance to cracking during thermal cycling or under high strain rate loading. This is especially important over this lower temperature range. This is believed to be related to either the covalent urethane crosslinking or to the polycarbonate component, or to a combination of these factors. The transition at about 60 °C may be related to a softening temperature of the polycaprolactone component. The second, more rapid, decrease in storage shear modulus, from 130-140 °C to 200 °C appears to be related to the reversal of the aromatic urethane bonds, especially those forming the crosslinked network.

The storage shear modulus values for composition J, after 25 minutes and 75 minutes of heating at 200-210 °C (FIGS. 4 and 5) show a second plateau from 100 to 140 °C much better, and at somewhat higher level ($\sim$7-5x$10^6$ dyne/cm$^2$) than is seen in composition H-a (FIG. 1). These data indicate some additional reaction, i.e. urethane bond formation, may have occurred upon further heating. They more clearly indicate possible urethane bond reversal, in particular the crosslinking bonds, above about 140 °C.

The tensile lap shear strengths for the compositions are given in Table 5. The compositions based on the aromatic polyester oligomer HQ/IPA/HQ and the polycaprolactone diol (PCP 530) showed good room temperature strength 8001-9779 N (1800-2200 psi). Composition C was sufficiently strong and adherent to result in some bending of the metal tab end as the adhesive sample was broken with cohesive failure. The composition based on the polycarbonate diol (PC) provided higher strength 12270 N (2760 psi) and considerably enhanced elongation or ductility. The adhesive samples extended about 40-50 percent before failure and the steel pieces were bent appreciably by fond failure. Bond failure was cohesive.

Hybrid compositions (D,E) containing about 8 weight percent of the diol as PC and 32 weight percent as the aromatic ester oligomer (HQ/IPA/HQ) or 40 weight percent of the diols as combined aromatic polyester and polycarbonate, showed enhanced room temperature strength $\sim$12446 N ($\sim$2800 psi) and very good elongation or ductility (about 30 percent sample extension before failure). Again cohesive failure occurred and considerable steel bending was observed.

Compositions in which the TDI/TMP based crosslinker CB75 was used in addition to the hybrid aromatic polyester/polycarbonate combination, showed intermediate but very good strength 10450-10570 N (2350-2378 psi). Elongation (ductility) was intermediate between compositions C and D, and E.

Composition H (and its replicate J) showed the highest lap shear strength of 13000-14200 N (3000-3200 psi), the extensibility or ductility of these bonds was again intermediate between C and D, and E. Composition K was a repeat of J with NDI in place of MDI. A somewhat lower strength 9779 N (2200) and slightly lesser ductility was observed than for K.

Compositions H and J were then tested at -35±5°C, 120°C and 130°C. For comparison, commercial hot melt adhesives PE6300HM and Unirez 2643, known to show good strength from -40 °C to moderately high temperatures ($\sim$100 °C) were also tested. The preparation and testing of the specimens is summarized above and in Table 3.

Composition J (MDI-based) showed excellent low temperature adhesive strength 13437 N (3023 psi).It lost no strength and in fact was somewhat stronger at -35±5 °C than at 23 °C. It was stronger than, and also more extensible (ductile) than, the commercial polyester hot melt. Composition K (NDI-based) was not quite as strong as J or the commercial adhesives at -35±5 °C but still had fairly good strength.

Both experimental adhesives were clearly superior to the commercial adhesives at 120 °C. The NDI-based adhesive is clearly better than the MDI-based adhesive at higher temperatures. It still showed 644 psi at 130 °C, while adhesive J was too weak to test at this temperature.

Hence these new adhesives based on hybrid compositions of aromatic polyester/aromatic polycarbonate diols, combined with an aliphatic polyester diol, and aromatic isocyanates, show a remarkable broad range of useful adhesive properties in this structural strength range.

TABLE 1.

| DIFFERENTIAL SCANNING CALORIMETRY[a]OLIGOMER MELTING RANGE | | |
|---|---|---|
| Example | Oligomer Structure[b,c] | DSC Melting, °C |
| 7 | HQDA/IPA/HQDA | 156-161 |
| 5 | HQ/IPA/HQ | 220-225 |
| 8 | PHBA/HQ/IPA/HQ/PHBA | 298-312 |
| 6 | BPA-C(BPA-C)$_9$-BPA | 198-215 (T$_g$ 101) |

(a) Perkin Elmer 7 Series Thermal Analyzer, 10 °C / minute, 7-8 mg sample

(b) Acronyms for components reacted together to produce the oligomer are used to depict the oligomer structure: HQDA = hydroquinone diacetate HQ = hydroquinone, IPA = isophthalic acid, TPA = terephthalic acid PHBA = para hydroxybenzoic acid BPA = bisphenol A (4,4'-isopropylidenediphenol) C = carbonate derived from phosgene (P) (c) Structures of Examples 5, 7 and 8 are all phenolic hydroxyl terminated aromatic ester oligomers based on the above (acronym) summarized structures. Example 9 is a bisphenol A phenolic hydroxyl terminated oligomer with a degree of polymerization (DP) of 9 (based on 10/9 BPA/P mole ratio).

TABLE 2.

| ADHESIVE COMPONENT EQUIVALENT WEIGHTS | | |
|---|---|---|
| | Equivalent Weight | |
| Component[a] | OH | NCO |
| PCP530 | 265 | - |
| HQ/IPA/HQ | 174.2 | - |
| PP | 170.2 | - |
| TMP | 44.7 | - |
| PC | 1258. | - |
| CB75 | - | 323 |
| MDI | - | 125.1 |
| NDI | - | 105.1 |

(a) For definition of components, see Table 3.

TABLE 3. HOT MELT ADHESIVE COMPOSITIONS AND LAP SHEAR STRENGTH[a]

| Composition Number | PCP530[b] | HQ/IPA/HQ[c] | PPP[d] | PC[e] | CB75[f] | TMP[g] | MDI[h] | NDI[i] | Lap Shear Strength[j] lb/in² | N |
|---|---|---|---|---|---|---|---|---|---|---|
| A | 3.315 | 2.134 | 0.0425 | - | - | - | - | 2.645 | 1820 | 8090 |
| B | 5.660 | - | 0.0425 | 4.330 | - | - | 3.140 | - | 2760 | 12270 |
| C | 3.315 | 2.129 | 0.0425 | - | - | - | 3.140 | - | 2288 | 10130 |
| D | 3.207 | 1.696 | 0.0360 | 0.433 | - | - | 2.814 | - | 2800 | 12446 |
| E | 3.207 | 1.696 | 0.0360 | 0.433 | - | - | 2.802 | - | 2790 | 12402 |
| F | 3.280 | 1.696 | 0.0360 | 0.433 | 0.073 | - | 2.802 | - | 2575 | 11446 |
| G | 3.280 | 1.696 | 0.0360 | 0.433 | 0.786 | - | 2.560 | - | 2350 | 10446 |
| H | 3.280 | 1.696 | 0.0180 | 0.580 | - | 0.101 | 3.116 | - | 3200 | 14224 |
| I | 3.280 | 1.148 | 0.0180 | 4.540 | - | 0.101 | 3.116 | - | 2820 | 12535 |
| J | 3.280 | 1.696 | 0.0180 | 0.580 | - | 0.101 | 3.116 | - | 3007 | 13366 |
| K | 3.280 | 1.696 | 0.0180 | 0.580 | - | 0.101 | - | 2.617 | 2203 | 9792 |

(a)   All components in grams. Equal equivalent amounts of hydroxyl and isocyanate groups used in each composition. Compositions prepared by hand melt blending of diol/polyol/aromatic polyphenol components under an argon blanket, followed by addition of the aromatic di-or trisocyanates. The preparation of composition C is described in Example 9.

(b)   PCP 530=polycaprolactone diol, hydroxy equivalent weight 265

(c)   HQ/IPA/HQ=bishydroquinone diester of isophthalic acid, preparation described in Example 5, hydroxy equivalent weight 174.2

(d)   PPP = 4-phenylphenol (p-phenylphenol), hydroxy equivalent weight 170.2

(e)   PC = polycarbonate based on bisphenol A and phosgene, with phenolic hydroxyl end groups and a degree of polymerization of approximately 9. Preparation described in Example 6, hydroxy equivalent weight 1258.

(f)   CB75 = Mondur CB75 triisocyanate crosslinker, isocyanate equivalent weight 323 (Mobay, based on trimethylolpropane reacted with 3 moles of toluene dissocyanate, TDI, to give an aromatic triisocyanate with ortho methyl groups adjacent to each isocyanate).

(g)   TMP = trimethylolpropane, hydroxy equivalent weight 44.7 (reacts in-situ with MDI to provide an aromatic triisocyanate crosslinker).

(h)   MDI = (4,4' diphenylmethane diisocyanate, isocyanate equivalent weight 125.1, Dow Isonate 125M).

EP 0 514 459 B1

(i)  NDI = (1,5 - naphthalene diisocyanate, isocyanate equivalent weight 105.1, Mobay Desmodur 15).

(j)  Lap shear strength.  Test samples assembled from 1 in x 3 in (2.54 x 7.62 cm) steel coupons (R-13) from Q panel Inc, Cleveland, Ohio.  Tensile test in Instron Floor Model TTE.  Results are average values for three adhesive test specimens. Hot melt composition (180-210 °C) hand applied to 1.0 x 0.5 in (2.54 x 1.77 cm) area of preheated (~180-200 °C) steel coupon.  Coupons firmly pressed together and excess adhesive (exudate) scraped away.  Assembled test samples then clamped together with two one-half inch, spring loaded, IDL binder clips.  Heat quickly (~1 min) to ~200 °C in air oven then cool to ambient.  Condition at 23 °C, 50 percent relative humidity for 24 hours before testing.

TABLE 4.

| Composition | DSC[a] | |
|---|---|---|
| Number | $T_g$ | $T_m$ |
| C | 46 | 144-220 |
| D | 44 | 144-220 |
| E | - | 140-227 |
| F | 44 | 155-222 |
| G | | 165-215 |
| H-a[b] | 46 | 150-209 |
| H-b[c] | 48 | 181-202 |
| I | 49 | 135-193 |
| J | 50 | 150-215 |
| K | 43 | 160-203 |

THERMAL CHARACTERIZATION OF HOT MELT ADHESIVE COMPOSITIONS

(a) Perkin Elmer 7 Series Thermal Analyzer, 7-8 mg sample, 10 °C/min. Compositions measured after about 10 minutes at 200-210 °C.

(b) Composition H as mixed.

(c) A portion of composition H removed immediately after mixing 1-2 minutes and 0.1 parts by weight dibutyl tin dilaurate catalyst added, then heated another -10 minutes. This shifts the melting point up about 30 °C.

TABLE 5.

LAP SHEAR STRENGTH[a]

| Sample Number | Description | Test Temperature, | | Maximum Load | Lap Shear Strength, | |
|---|---|---|---|---|---|---|
| | | . C[b] | kg | , lbs[c] | N | psi |
| Unirez 2643[d] | Commercial Polyamide | -35±5 | 254 | 560 | 4978 | 1120 |
| | | | 254 | 560 | 4978 | 1120 |
| | | | 272 | 600 | 5334 | 1200 |
| | | | $\overline{260}$ | $\overline{573}$ | $\overline{5098}$ | $\overline{1147}$ |
| PE6300HM[e] | Commercial Polyester | -35±5 | 465 | 1025 | 9112 | 2050 |
| | | | 481 | 1060 | 9423 | 2120 |
| | | | 522 | 1150 | 10224 | 2300 |
| | | | $\overline{489}$ | $\overline{1078}$ | $\overline{9588}$ | $\overline{2157}$ |
| J[f] | (IPA/HQ)/ PC/ | -35±5 | 851 | 1875 | 16669 | 3750 |
| | PCL/ TMP+MDI | | 934 | 2060 | 18313 | 4120 |

(a) Adhesive samples prepared using 1 x 3 in (2.54 x 7.62 cm) steel coupons (R-13, Q Panel Inc., Cleveland, Ohio). Hot melt composition (~200 °C) applied to 1.0x0.5 in. area of preheated (~150-200 °C) steel coupon. Clamped with small springline clamps and allowed to cool slowly. Conditioned at 23 °C for 24 hours then at test temperature for ten minutes prior to testing.

(b) Tested with Instron Floor Model TTE Cold (-35±5 °C) test specimens prechilled in -40 °C isopropanol (chilled with dry ice and tested immediately). Heated samples (120 °C, 130 °C) tested in Instron temperature control cabinet after equilibrating 10 min. All samples tested at 0.5 cm/min (0.2 in/min) have separation rate to break. Maximum load at break for three samples per test set and the mean value are listed 1.3 $cm^2$ (0.5 $in^2$ area).

(c) Cold (-35±5 °C) test specimens prechilled.

(d) Union Camp commercial polyamide hot melt adhesive.

(e) H.B. Fuller commercial polyester hot melt adhesive.

(f) Aromatic/aliphatic polyester-polycarbonate diols plus 10 equivalent percent trimethylol-propane (TMP) crosslinker, and 0.05 equivalent percent p-phenyl (PPP) for end capping groups, reacted with diphenyl methane diisocyate (MDI) in nearly 1/1 equivalent ratio of aliphatic and aromatic (phenol) hydroxyl/isocyanate groups. IPA/HQ = bis-hydroquinone/isophthalic acid diester diol, PC = hydroxyl (phenol) capped bisphenonal A/phosgene polycarbonate oligomer with degree of polyermization = 9, PCL= PCP530 (polycaprolactone diol, MW

TABLE 5.   (continued)

| LAP SHEAR STRENGTH[a] | | | | | | |
|---|---|---|---|---|---|---|
| Sample Number | Description | Test Temperature, | | Maximum Load | | Lap Shear Strength, |
| | | . C[b] | kg | , lbs[c] | N | psi |
| | | | 272 | 600 | 5334 | 1200 |
| | | | $\overline{685}$ | $\overline{1511}$ | $\overline{13437}$ | $\overline{3023}$ |
| K[g] | (IPA/HQ)/ PC/ PLC/ THP+NDI | -35±5 | 136 | 300 | 2667 | 600 |
| | | | 181 | 400 | 3556 | 800 |
| | | | 125 | 275 | 2445 | 550 |
| | | | $\overline{147}$ | $\overline{325}$ | $\overline{2889}$ | $\overline{650}$ |
| Unirez 2643 . | Commercial Polyamide | 23 | 329 | 725 | 6445 | 1450 |
| | | | 318 | 700 | 6223 | 1400 |
| | | | 340 | 750 | 6668 | 1500 |
| | | | $\overline{329}$ | $\overline{725}$ | $\overline{6445}$ | $\overline{1450}$ |
| PE6300HM | Commercial Polyester | 23 | 295 | 650 | 5779 | 1300 |
| | | | 352 | 775 | 6890 | 1550 |
| | | | 256 | 565 | 5023 | 1130 |
| | | | $\overline{301}$ | $\overline{663}$ | $\overline{5894}$ | $\overline{1326}$ |
| J[f] | See above | 23 | 680 | 1500 | 13335 | 3000 |
| | | | 771 | 1700 | 15113 | 3400 |
| | | | 590 | 1300 | 11646 | 2620 |
| | | | $\overline{681}$ | $\overline{1503}$ | $\overline{13366}$ | $\overline{3007}$ |
| K[g] | See above | 23 | 442 | 975 | 8668 | 1950 |
| | | | 680 | 1500 | 13335 | 3000 |
| | | | 380 | 837 | 7379 | 1660 |
| | | | $\overline{490}$ | $\overline{1102}$ | $\overline{9792}$ | $\overline{2203}$ |
| Unirez 2643 | Commercial Polyamide | 120 | 1,4 | 3 | 26,7 | 6 |
| | | | 3,2 | 7 | 62 | 14 |
| | | | 1,8 | 4 | 35,6 | 8 |
| | | | $\overline{2,1}$ | $\overline{4.6}$ | $\overline{41,3}$ | $\overline{9.3}$ |

(a) Adhesive samples prepared using 1 x 3 in (2.54 x 7.62 cm) steel coupons (R-13, Q Panel Inc., Cleveland, Ohio). Hot melt composition (~200 °C) applied to 1.0x0.5 in. area of preheated (~150-200 °C) steel coupon. Clamped with small springline clamps and allowed to cool slowly. Conditioned at 23 °C for 24 hours then at test temperature for ten minutes prior to testing.

(b) Tested with Instron Floor Model TTE Cold (-35±5 °C) test specimens prechilled in -40 °C isopropanol (chilled with dry ice and tested immediately). Heated samples (120 °C, 130 °C) tested in Instron temperature control cabinet after equilibrating 10 min. All samples tested at 0.5 cm/min (0.2 in/min) have separation rate to break. Maximum load at break for three samples per test set and the mean value are listed 1.3 $cm^2$ (0.5 $in^2$ area).

(c) Cold (-35±5 °C) test specimens prechilled.

(f) Aromatic/aliphatic polyester-polycarbonate diols plus 10 equivalent percent trimethylol-propane (TMP) crosslinker, and 0.05 equivalent percent p-phenyl (PPP) for end capping groups, reacted with diphenyl methane diisocyate (MDI) in nearly 1/1 equivalent ratio of aliphatic and aromatic (phenol) hydroxyl/isocyanate groups. IPA/HQ = bis-hydroquinone/isophthalic acid diester diol, PC = hydroxyl (phenol) capped bisphenonal A/phosgene polycarbonate oligomer with degree of polyermization = 9, PCL= PCP530 (polycaprolactone diol, MW

(g) Aromatic/aliphatic polyester - polycarbonate diols, plus 10 equivalent percent trimethylol-propane (TMP) crosslinker, and 0.05 equivalent percent p-phenylphenol (PPP) for end capping groups, reacted with 1,5-naphthalene diisocyanate, or NDI, in nearly 1/1 equivalent ratio of aliphatic and aromatic (phenol) hydroxyl/isocyanate groups, same polyester and polycarbonate diol oligomers as in adhesive J.

TABLE 5.   (continued)

| LAP SHEAR STRENGTH[a] | | | | | | |
|---|---|---|---|---|---|---|
| Sample Number | Description | Test Temperature, | | Maximum Load | Lap Shear Strength, | |
| | | . C[b] | kg | , lbs[c] | N | psi |
| PE6300HM | Commercial Polyester | 120 | 2,7 | 6 | 53 | 12 |
| | | | 1,8 | 4 | 35,6 | 8 |
| | | | 4,5 | 10 | 89 | 20 |
| | | | 30 | 6.7 | 59 | 13.3 |
| J[f] | See above | 120 | 127 | 280 | 2489 | 560 |
| | | | 59 | 130 | 1156 | 260 |
| | | | 70 | 155 | 1378 | 310 |
| | | | 85 | 188 | 1676 | 377 |
| K[g] | See above | 120 | 352 | 775 | 6890 | 1550 |
| | | | 261 | 575 | 5112 | 1150 |
| | | | 227 | 500 | 4445 | 1000 |
| | | | 280 | 617 | 5485 | 1234 |
| K[g] | See above | 130 | 181 | 400 | 3556 | 800 |
| | | | 143 | 315 | 2800 | 630 |
| | | | 113 | 250 | 2223 | 500 |
| | | | 146 | 322 | 2863 | 644 |

(a) Adhesive samples prepared using 1 x 3 in (2.54 x 7.62 cm) steel coupons (R-13, Q Panel Inc., Cleveland, Ohio). Hot melt composition (~200 °C) applied to 1.0x0.5 in. area of preheated (~150-200 °C) steel coupon. Clamped with small springline clamps and allowed to cool slowly. Conditioned at 23 °C for 24 hours then at test temperature for ten minutes prior to testing.

(b) Tested with Instron Floor Model TTE Cold (-35±5 °C) test specimens prechilled in -40 °C isopropanol (chilled with dry ice and tested immediately). Heated samples (120 °C, 130 °C) tested in Instron temperature control cabinet after equilibrating 10 min. All samples tested at 0.5 cm/min (0.2 in/min) have separation rate to break. Maximum load at break for three samples per test set and the mean value are listed 1.3 cm$^2$ (0.5 in$^2$ area).

(c) Cold (-35±5 °C) test specimens prechilled.

(f) Aromatic/aliphatic polyester-polycarbonate diols plus 10 equivalent percent trimethylol-propane (TMP) crosslinker, and 0.05 equivalent percent p-phenyl (PPP) for end capping groups, reacted with diphenyl methane diisocyate (MDI) in nearly 1/1 equivalent ratio of aliphatic and aromatic (phenol) hydroxyl/isocyanate groups. IPA/HQ = bis-hydroquinone/isophthalic acid diester diol, PC = hydroxyl (phenol) capped bisphenonal A/phosgene polycarbonate oligomer with degree of polyermization = 9, PCL= PCP530 (polycaprolactone diol, MW
(g) Aromatic/aliphatic polyester - polycarbonate diols, plus 10 equivalent percent trimethylol-propane (TMP) crosslinker, and 0.05 equivalent percent p-phenylphenol (PPP) for end capping groups, reacted with 1,5-naphthalene diisocyanate, or NDI, in nearly 1/1 equivalent ratio of aliphatic and aromatic (phenol) hydroxyl/isocyanate groups, same polyester and polycarbonate diol oligomers as in adhesive J.

The following examples are disclosed to further teach the practice of the invention and are not intended to limit the invention as it is delineated in the claims.

Example 1

To a clean flame-dried 250 ml Pyrex round-bottom flask was added 5.2 g (0.040 eq) Isonate 143L (80% diphenylmethane diisocyanate and 20% of its triisocyanate cycloadduct) from Upjohn's polymer chemicals and 3.8 g (0.040 eg) of phenol. The flask contents were gradually heated in an oil bath to 160°C under argon to obtain a uniform melt. Molten Niax polyol PCP-0200 (5.3 g, 0.020 eq) was gradually blended into the melt and the flask temperature maintained at 156°C during the addition. A yellow-white precipitate was noted after the addition which gradually remelted as the temperature was increased to 165°C. Then 2.35 g (0.020 eq) of bisphenol A was melt blended into the melt. The temperature of the mixture was gradually increased to 240°C (464°F) to drive the equilibrium of the phenol/bisphenol A reaction in favor of reacting with bisphenol A and thus distilling off phenol. During this increase in temperature the melt became an orange-gold viscous liquid and most probably a prepolymer. In this way 2.0 g of phenol was distilled from the prepolymer melt over a 20 minute period. The product was a clear viscous melt which solidified when cooled to an insoluble, tough plastic with good adhesion to steel.

Example 2

Example 2 was done in the same manner as Example 1, using Niax polyol PCP-0260 (30.0 g, 0.020 eq) instead of PCP-0200. No precipitate was noted during this procedure. The resulting hot melt of this experiment qualitatively seemed to produce better bonding properties than the product of Example 1. This is most likely due to an increase in the molecular weight of the polycaprolactone diol used and thus an increase in the strength and toughness of the crosslinked polyurethane-polyester product.

Examples 1 and 2 were carried out using Upjohn's polyisocyanate Isonate 143L (80% diphenylmethane diisocyanate and 20% of its triisocyanate cycloadduct) and Union Carbide's Niax polyols PCP-0200 and PCP-0260 (polycaprolactone diols of varying DP). These proved quite successful. Initially, two equivalents of the Isonate 143 L were blocked with two equivalents of phenol at 160°C to protect the isocyanate groups against hydrolysis. The phenol could then be selectively removed as needed by reaction with the aliphatic polydiols or by equilibration with polyphenols. Thus, molten PCP-0200 (Example 1) or PCP-0260 (Example 2) were gradually added to the blocked Isonate 143L/phenol product and the temperature maintained at 160°C. Then with stirring, one equivalent of bisphenol A (relative to the aromatic phenol urethane groups) was added and the temperature of the mixture was gradually increased to about 240°C to drive the equilibrium of the phenol/bisphenol A reaction in favor of reacting with bisphenol A and removing phenol by distillation. The removal of nearly one equivalent of phenol in Examples 1 and 2 produced a bisphenol A extended, phenol end-capped Isonate 143L-PCP polyester-polyurethane block copolymer.

Example 3

The resulting melts of Examples 1 and 2 were tested as reactive hot melt adhesives by application to pairs of steel coupons. The melts were observed to have instant tack to steel and aluminum substrates and developed qualitatively good adhesive and cohesive strengths as they cooled and resolidified. However, it was qualitatively easier, using the hand assembly procedure, to obtain good flow-out to a thin adhesive layer of the molten adhesive between the pieces of metal, if the metal was preheated to about 50-60°C. Consequently, the test adhesives were applied to approximately 6.5 cm$^2$ (1 in$^2$) overlapping areas of trichloroethane degreased 2.5 cm x 12.7 cm (1 in. x 5 in.) steel coupons cut from Q-panels and previously heated on a hot plate to about 60°C. The coupons were overlapped with slight pressure for 10 seconds and allowed to cool to room temperature. A very strong (qualitative) bond resulted. The bond was still strong and unchanged after 40 days at room temperature and moisture.

Example 4

Retained samples of the neat polymer product from Examples 1 and 2 exposed to room air and moisture for 40 days remained tough and pliable. Small (0.2-0.4 g) samples gave a free-flowing, moderate viscosity, liquid at 400°F. This product swelled (several volumes) but did not dissolve in methyl cellosolve acetate or trichloroethylene at room temperature. These results show that the adhesive is still crosslinked, strong, and tough at room temperature, but readily depolymerized to uncrosslinked, relatively low molecular weight fragments at about 400°F.

Example 5

Preparation or Bis-Hydroquinone Ester of Isophthalic Acid

Two hundred fifty ml of dry (H$_2$O < 0.001%) dimethyl acetamide (DMAC; Dimethylacetamide; Aldrich 21,707-2) and 43.5 gm (44.5 cc; 0.525 moles) dry (over CaH$_2$) pyridine (Aldrich 36,057-0) were added to a flame dried 2 liter, 3 neck round bottom flask equipped with a Trubore stirrer (Teflon paddle), inert gas (argon) inlet and outlet, thermometer, and stoppered pressure equalizing addition funnel. While stirring slowly with an argon flush, vacuum dried (60 °C, 24 hr, 0.5 Torr) crystalline hydroquinone (99%; Aldrich 1,790-2; 220.2 gm; 2.00 mole) was added slowly enough to prevent clumping. The isophthaloyl chloride (IPC; Aldrich 36,0570-0 as received; 50.8 gm; 0.250 moles) was dissolved separately in 300 ml additional dry dimethyl acetamide in a flame dried 500 ml round bottom flask, also under argon flushing. The IPC/DMAC was gently heated on a heating mantle while hand slurrying to dissolve. The clear light yellow solution was then placed in the dropping funnel and added to the rapidly stirred HQ solution over a 45 minute period. The temperature quickly rose to about 55 °C then stabilized until the IPC addition was complete. There was no precipitate (pyridine hydrochloride) at this point. A small aliquot of this solution when cooled to - 5 °C exhibited crystallization of water soluble pyridine hydrochloride. However, the entire reaction mixture was precipitated in 4 liters of distilled water. Surprisingly, this provided insoluble product diester and solubilized the unreacted HQ and the pyridine hydrochloride. The light yellow precipitate was easily filtered using a 25-50 µm fritted glass Buchner funnel and aspirator vacuum. It was washed thoroughly with distilled water, air dried overnight in a thin layer in a pyrex baking dish, then vacuum dried to provide 69 g of light yellow, powdery solid with a Fisher-Johns hot stage melting point of 221-222 °C. This was a 79 percent recovery based on a theoretical yield of 87.6 g of the bis-hydroquinone ester of isophthalic acid. DSC thermal analysis (7.5 mg, Perkin Elmer 7 Series Thermal Analyzer, 10 °C/min) showed a melting exotherm at 220-225 °C. The proton NMR spectrum was determined using a Brucker high resolution NMR. There are 14 total proton assignments, with 2 phenolic protons (14.8 percent theoretical). Found were 12.90 percent phenolic protons at δ 9,50 (ppm). This was in good agreement with the expected total.

Example 6

Preparation of Phenolic-hydroxyl Terminated Bisphenol A/Phosgene Polycarbonate Oligomers

The 4,4'-isopropylidenediphenol (Bisphenol A)(BPA; Aldrich 13,302-7, 99.4%; 45.3 gm, 0.2000 mole; vacuum dried at 60 °C, 0.2 Torr for 4 hours) was added to a flame dried, argon purged, 300 ml, 3 neck round bottom pyrex flask fitted with an inert (argon) gas inlet and outlet, flame dried dropping funnel and Trubore stirrer with Teflon blade. Ninety ml of dry methylene chloride ($CH_2Cl_2$; Burdick and Jackson 300-4, dried over $CaH_2$) followed by 52.0 ml dry triethylamine (Aldrich 13,206-3; dried over $CaH_2$; 0.187 mole) were added through the dropping funnel. The dropping funnel was rinsed with 10 ml more $CH_2Cl_2$. The BPA was dissolved by stirring slowly for 30 minutes at room temperature. A slight positive argon pressure was maintained (1 bubble of gas per 2 or 3 seconds through a mineral oil filled gas outlet bubble tube). A 50 cc hypodermic syringe was predried (disassembled, 1 hour in air oven at 110 °C) and cooled to room temperature in a desiccator containing Drierite. It was reassembled and rinsed and conditioned with some phosgene in toluene, which was ejected and discarded. The syringe was loaded and 50 cc phosgene solution (Fluka 79380, 20% in toluene; 1.93 Molar, 2% Hcl impurity) was delivered to the dropping funnel. The syringe was loaded again and an additional 43.3 cc of the phosgene solution delivered for a total of 93.3 cc (17.8 gm, 0.180 mole). Twenty-five ml of $CH_2Cl_2$ was layered on the phosgene solution and then added with rapid dropwise addition to the rapidly stirred bisphenol A solution. A precipitate appeared after about 7 ml of the phosgene solution was added. As the addition continued, the reaction mixture began to heat up. The flask was cooled with a water/ice bath to keep it near room temperature. All phosgene solution was added after about 33 minutes. The dropping funnel was rinsed into the reaction flask with an additional 25 ml $CH_2Cl_2$. The reaction mixture was a slightly viscous moderately thick slurry. It was left stirring slowly overnight at room temperature. The slurry appeared unchanged the next morning. It was easily filtered through a "C" fritted glass Buchner funnel providing a clear light yellow solution and a fine white precipitate. The precipitate was washed three times with -50 ml portions of $CH_2Cl_2$ and air dried. Obtained were 36.7 g water soluble white powder (72 percent recovery based on theoretical pyridine hydrochloride yield of 50.9 g). The missing salt was presumed dissolved in the oligomer solution.

The polycarbonate oligomer solution was concentrated to -200 ml and precipitated in a ten fold excess (-2 liters) of reagent grade methanol by slow hand addition (-45 minutes) to the rapidly hand-stirred methanol. A fine white precipitate that readily separated to give a cloudy supernatant liquid was obtained. This was filtered through number 2 Whatman filter paper on a Buchner funnel. It was washed four times with 50 ml portions of fresh methanol and air dried overnight. It was then vacuum dried at room temperature for two days. Obtained were 43.1 g of white powder. This is an 87.5 percent recovery based on a theoretical oligomer yield of 50.2 g. Apparently some pyridine hydrochloride and product oligomer either were dissolved in, or colloidally dispersed in, the methanol filtrate.

The oligomer melted at ~205-215 °C on a Fisher-Johns hot stage melting point apparatus. DSC thermal analysis showed a $T_g$ (endotherm) at 101 °C and a melting exotherm of 198-215 °C. Proton-NMR analysis in deuterated DMSO gave a spectrum consistent with a DP9 polycarbonate oligomer with phenolic hydroxyl end group protons (δ, ppm 9.2). This is based on the presence of 60 methyl protons, 80 aromatic protons and 2 hydroxyl protons. Theoretical hydroxyl protons, 1.42%; found 1.48%.

Example 7

Preparation of Bis-Paraacetoxyphenyl Ester of Isophthalic Acid

The isophthalic acid (IPA; Aldrich 99% as received; 96.6 gm, 0.576 mole) and the hydroquinone diacetate (HQDA; Frinton Labs 96% as received; 465.65 gm, 2.304 mole) were added to a 3 neck, 3 liter flask fitted with a Trubore stirrer (Teflon paddle), inert gas (argon) inlet purge tube and argon outlet (through a mineral oil bubble tube to visualize gas purge rate), and Claisen head with two thermometers, one with adjustable height (for insertion in the melt during the reaction), and one at the distillation exit to measure distillation temperature. A water cooled distillation condenser was connected to the Claisen head to condense acetic acid byproduct. The mixture was heated to the melting temperature (-160-170 °C) using a Glasscol 3-liter heating mantle. The temperature under the heating mantle (between the mantle surface and the flask surface) was monitored with two thermocouples, one under the bottom center of the flask and one about half way up one side of the heating mantle/reaction flask interface. The temperature of the reaction mixture was controlled by using the thermometer in the melt as the measuring/temperature controller via an I$^2$R Thermowatch L8-2000 SS capacitance controller (capacitor band adjusted on a mercury thermometer to the desired control temperature). This was held constant at 230 °C. The temperatures under the bottom and at the side of the flask/mantle interface were observed closely, and maintained at 242±3 °C and 232±3 °C respectively throughout the reaction period by using a Variac set at 30-50 volts. The coreactants were melted over a 45 minute period of slow heatup from ambient temperature to ~ 167 °C, while purging the melt with argon gas. Over the next hour, the melt temperature was raised to 230 °C (mantle/flask bottom 230 °C, side 221 °C). While stirring vigorously, and continuing a slow argon purge (~1 bubble per sec). Acetic acid was distilled steadily for approximately 4 hours 15 minutes. Recovered were 68.2 g of byproduct acetic acid, or 98.7 percent of the theoretical yield of 69.1 g.

The product was a light tan solid containing a large amount (~232.8 g) of excess, unreacted HQDA. Since HQDA solubility in methanol ($CH_3OH$) is ~6.3 weight percent at 23 °C, ≥4.7 liters of $CH_3OH$ should dissolve all unreacted HQDA. Therefore, the product was crushed into a fine powder and washed with 2.8 liters of methanol by slurrying the powder in the methanol for several hours and suction filtering through a 25-50 µ frit. It was then treated similarly four more times, using 1.2 liters of methanol per trituration. Hence, the product was washed with a total of 7.6 liters of methanol, or 2.9 liters more than the amount required to dissolve 233 g. The solid product was dried and yielded 192 g (76.8 percent of theoretical) of HQDA/IPA/HQDA. The light tan solid melted at 140-155 °C on a Fisher Johns hot stage melting point apparatus. The melting point determined by DSC was 156-161 °C. Proton NMR was run in DMSO. The spectrum is in good agreement with the expected bis-paraacetoxy ended aromatic ester.

Example 8

Preparation of PHBA/HO/IPA/HO/PHBA Phenolic-hydroxyl Terminated Oligomer

The bis-paraacetoxyphenyl ester of isophthalic acid (67.46 gm, 0.1553 mole) from Example 7 was added to a three neck, three liter flask fitted with a Trubore stirrer (Teflon paddle), inert gas (argon) inlet purge tube and argon outlet (through a mineral oil bubble tube to visualize gas purge rate) and Claisen head with two thermometer (one with adjustable height for insertion in the melt during the reaction), and one at the distillation exit to measure distillation temperature. A water cooled distillation condenser was connected to the Claisen head to condense byproduct acetic acid. The solid isophthalic acid bis-ester was headed to its melting temperature of about 155 °C over a 25 minute period, while purging the flask with a vigorous stream of argon, using a Glasscol 3-liter heating mantle. Then the p-hydroxybenzoic acid (PHBA; Aldrich H2,005-9, 99%; 43.33 gm, 0.1533 mole) was added. The melt (pot) temperature was raised to 225 °C over an 18 minute period. Acetic acid distillation started.

The temperature under the heating mantle (between the mantle surface and the flask surface) was monitored with two thermocouples, one under the bottom center of the flask and one about half way up one side of the heating mantle/reaction flask interface. The temperature of the reaction mixture was controlled by using the mercury level of the thermometer in the melt as the measuring/temperature controller via an I$^2$R Thermowatch L8-2000 SS capacitance controller. This was held constant at 225 °C. The temperatures under the bottom and at the side of the flask/mantle interface were observed closely, and maintained at 215±3 °C respectively throughout the reaction period by using a variac set at 30-45 volts.

Acetic acid was slowly distilled over a four hour period, with 15.4 gm (15.4/18.7x100=82.4 percent of theoretical) collected. During the last hour, the rate of acetic acid distillation fell to nil. PHBA is known to thermally decarboxylate slowly at the temperature of this reaction to provide $CO_2$ and unreactive phenol and it was concluded this side reaction had occurred to some extent. Hence, another additional 25 g of PHBA was added and the reaction continued at a melt (pot) temperature of about 220 °C for -4 hours and an additional 2.6 g acetic acid were collected. However, the acetic acid evolution had again essentially ceased. Another 25 g PHBA were added and the reaction continued for another two hours and another 1.0 g of acetic acid was collected before evolution ceased, to give a total of 18.9 gm. This is 100.8 percent of theoretical (18.9/18.75x100=100.8 percent). Hence, the reaction to convert the bis-acetoxyphenyl ester to the bis-hydroxyphenyl tetraester went essentially to completion. The pot temperature was raised to ~235-240 °C, the distillation condenser cooling water shut off and the argon purge increased greatly. Much of the byproduct phenol was then distilled, 41.1 gm collected, or 82 percent of the 50.3 g expected from thermal dissociation of the 0.214 mole of excess PHBA used. The crude product yield of bis-phenol terminated tetraester was 101.77. If unaccounted phenol (-9.2g) is subtracted, this gives 92.57 g. This compares very well with the theoretical or expected yield of 91.7 g. The extra 0.9 g is attributed to a small amount of the excess PHBA still being present (not decomposed to $CO_2$ and phenol).

A large portion (95.91 g) of this crude product was washed thoroughly (triturated 24 hours) with two liters of methanol to dissolve the phenol and unreacted PHBA. The slurry was suction filtered on a 25-50 µm glass fritted Buchner funnel. The light tan powder was vacuum dried 18 hours at 66 °C and 30 in Hg in a vacuum oven. The dry powder weighed 79.85 g (83.3 percent recovery, or 16.7 percent removed by the methanol wash). The Fisher Johns hot stage melting point was ~280-300 °C. DSC melting characterization using the Perkin Elmer 7 Series thermal analyzer (7.5 mg sample, 10 °C/min) showed melting at 298-312 °C.

Example 9

Hot Melt Adhesive Composition C

The polycaprolactone diol (PCP-530; Aldrich 18,940-5; 3.315 gm (0.0250 eq), paraphenylphenol (PPP; Aldrich 13,434, 97%; 0.0425 gm, 0.0050 eq) and bis-hydroquinone isophthalic acid diester oligomer (HQ/IPA/HQ, phenol end groups from Example 5; 2.129 gm, 0.0245 eq) were melted together while hand mixing with a stainless steel spatula in a 180 ml electrolytic (deep) beaker under an inert gas (argon) blanket at about 150 °C. The diphenylmethanediisocyanate (crystalline MDI, Isonate 125M, Dow, mp 37 °C; 3.140, 0.0500 eq) was added while the melt was stirred at ~150 °C. It was quickly incorporated in the melt and the viscosity increased to a fairly high level in about five minutes. The melt was heated to 180 °C and the viscosity decreased to a very easily stirred level. Adhesive specimens were then hand assembled by applying melted adhesive to 0.5 x 1.0 inch areas (1.27 x 2.54 cm) on the ends of 1 x 3 x 0.032 inch (2.54 x 7.62 x 0.0813 cm) dull finish steel 1/4 hard (R-13) coupons (Q Panel Inc., Cleveland, Ohio). The steel test coupons had been hand cleaned/degreased first with a kimwipe soaked with toluene, then one soaked with methyl alcohol, and preheated on a hot plate set at -180 °C surface temperature. The test samples were adjusted to give 0.5 in$^2$ (1.61 cm$^2$) contact area, firmly pressed together by hand, the excess adhesive exudate scraped away and the assembled test specimen clamped together with two, one-half inch, spring loaded, IDL binder clips. One clip was placed on each side of the overlapped bond area. The partially cooled samples were then placed in a 200 °C air oven briefly (3-5 minutes) to insure that the adhesive had flowed and contacted all the metal surfaces. The samples were then allowed to cool to ambient temperature and placed in a constant temperature/humidity (73 F, 20% relative humidity) room to condition for 24 hours prior to testing.

Example 10

Tetraphenol Ionic Crosslinker

A meltable zinc dicarboxylate salt was synthesized from a bisphenol containing a carboxylic acid group and zinc diacetate by a thermally driven disproportionation reaction. Byproduct acetic acid was evaporated as it formed driving the formation of the di-bisphenol zinc dicarboxylate to completion. Thus 5.726 grams (0.0200 moles) of 4,4'-bis (4-hydroxyphenyl) valeric acid (Aldrich B4,770-7, 95%) and 2.195 grams (0.0100 mole) of zinc diacetate dihydrate (Aldrich 22,335-2, 98%) were added to a 180 ml electrolytic beaker. An argon gas flush was directed over the contents to displace air (oxygen). The beaker was placed in molten woods metal in a bath thermostatically controlled at 195-200°C. The contents were hand stirred with a stainless steel spatula. The bisphenol (m.p. 167-170°C) melted quickly and a slurry of the zinc diacetate was observed. Very quickly boiling commenced and acetic acid began to distill off rapidly. It was swept from the reaction zone with a vigorous argon purge. In -15 minutes, the slurry became a clear red, slightly viscous melt and the distillation of acetic acid ceased. The clear melt solidified to 6.42 grams of a clear, hard, red glassy solid at room temperature. The theoretical yields were 1.20 grams (0.02 moles) of acetic acid, 0.18 grams water (0,0100 mole) and 6.54 grams of zinc dicarboxylate salt of the bisphenol carboxylate compound. Hence, a near theoretical yield of zinc salt product was obtained (6.42/6.54x100 = 98.2 percent of theoretical).

Example 11

Hot melt adhesive compositions were prepared using the zinc dicarboxylate salt of 4,4'-bis (4-hydroxyphenyl) valeric acid of Example 10 in place of trimethylol-propane (TMP) as the trifunctional crosslinker. Composition H was repeated using 0.240 grams (0.00151 equivalents of phenolic hydroxyl groups) of the zinc salt. Hence 3.280 grams PCP 530, 0.0180 grams PPP, 1,696 grams of the aromatic bis-hydroquinone ester of isophthalic acid (example 5), 0.580 grams of the polycarbonate oligomer of example 6, and the 0.240 grams of the zinc compound were melted together in a 180 ml electrolytic beaker, while stirring under argon with a stainless steel spatula, at ~210°C. The clear, thin melt was cooled to ~ 130°C and 3.026 grams of MDI added. The mixture was heated to ~150°C then to ~180°C while stirring over an -10 minute period. The viscosity increased steadily. It was then heated to ~210°C where a thin melt was obtained. Four lap shear test samples were hand prepared, as before, by applying adhesive to the steel tab ends preheated to ~180°C on a hot plate. The test specimens were clamped, heated five minutes at ~200°C in an air oven, cooled, and conditioned at 23°C and 50 percent relative humidity for four hours. They were then tested in the Instron machine. Obtained were values of lap shear strength of 16 713, 13 335, 17 336 and 14 002 N (3760, 3000, 3900 and 3150 lbs/in$^2$) at 23°C. The breaks were cohesive and quite ductile (~40 percent elongation). The average value was 14 811 N (3332 lbs/in$^2$). This compares very favorably with the results for composition H. The adhesive was, however, found to be soluble in NMP at room temperature. This result was unexpected and may be due to the highly polar nature of NMP and possible water content in the solvent used for test. The water and polar environment may facilitate bond reversal.

**Claims**

1. A stable, melt-processable, high-temperature polyurethane polymer composition, comprising:

   (A) a labile-hydrogen functionality segment selected from the group consisting of
   oligomeric aromatic carbonates and oligomeric aromatic esters with phenolic hydroxyl end group functionalities having labile hydrogen end groups and with a degree of polymerization of 1-20 and

   (B) an isocyanate functionality segment selected from the group consisting of:

      oligomeric aromatic, aliphatic, cycloaliphatic or aralkyl polyisocyanate containing from 6 to 100 carbon atoms having reactive isocyanate end groups;

   wherein said labile-hydrogen segment and said isocyanate segment are linked by a thermally-reversible, isocyanate-labile urethane bond hydrogen backbone linkage, and wherein said linkage has the characteristic of dissociating only above 150° C into said labile-hydrogen segment and said isocyanate segment as a free flowing melt.

2. The melt-processable polymer composition of claim 1 further comprising said thermally-reversible isocyanate-labile urethane bond hydrogen cross-links between neighboring polymer chains.

3. The melt-processable polymer composition of claim 1 **characterized in that** said isocyanate-labile urethane bond hydrogen backbone linkage is bonded to an aryl group, an alkyl group, an aryl and an alkyl group, or only aryl groups.

4. The melt-processable polymer composition of claim 1 further comprising:

   (C) a toughening aliphatic prepolymer backbone group having a labile-hydrogen segment which provides ambient or low-temperature flexibility and toughness to the final polymer composition characterized as a polyol, a polycaprolactone diol, a polytetramethylene ether glycol, a polyaliphatic carbonate diol, a hydroxy-ended aliphatic polyester, or a saturated hydroxy-ended phthalic acid-based polyester.

5. The melt-processable polymer composition of claim 1 wherein said isocyanate segment is characterized as a toluene diisocyanate, a naphthalene diisocyanate, a phenyl diisocyanate, or a trilsocyanate including a triisocyanate formed in situ from a diisocyanate and a triol such as trimethylolpropane.

6. The melt-processable polymer composition of claim 1 **characterized in that** said aromatic polyester is a bishydroquinone ester of isophthalic acid with phenolic end groups or a bis-paraacetoxy-phenyl ester of isophthalic acid with the acetate groups replaced by parahydroxybenzoate groups; and said polycarbonate oligomer is formed from bisphenol A and phosgene and has phenolic hydroxyl end groups.

7. Use of said polymer composition of any of claims 1-6 as a hot melt adhesive.

8. A process for forming a composition according to claim 1 comprising reacting a first compound with isocyanate functionality as defined unter (B) in claim 1 with a second compound with labile-hydrogen functionality as defined under (A) in claim 1.

9. The process according to claim 8 further **characterized by** the step of adding, prior to the addition of said compound with isocyanate functionality, an additional labile-hydrogen compound **characterized in** having ionic functionality capable of forming thermally-reversible ionic bonds.

**EP 0 514 459 B1**

**Patentansprüche**

1. Eine stabile, schmelzverarbeitbare, Hochtemperatur-Polyurethan-Polymer-Zusammensetzung, umfassend:

   (A) ein labiles Wasserstoff-Funktionalitätssegment, ausgewählt aus der Gruppe bestehend aus:

   oligomeren aromatischen Karbonaten und oligomeren aromatischen Estern mit phenolischen Hydroxyl-Endgruppen-Funktionalitäten mit labilen Wasserstoff-Endgruppen und mit einem Polymerisationsgrad von 1-20 und

   (B) ein Isozyanat-Funktionalitätssegment, ausgewählt aus der Gruppe bestehend aus:

   oligomerem aromatischen, aliphatischen, zykloaliphatischen oder Aralkyl-Polyisocyanat, enthaltend von 6 bis zu 100 Kohlenstoffatomen mit reaktiven Isozyanat-Endgruppen;

   wobei das labile Wasserstoff-Segment und das Isozyanat-Segment durch eine thermisch reversible, Isozyanat-labile Urethanbindung - Wasserstoff-backbone - Verbindung verbunden sind, und wobei die Verbindung die Charakteristik hat, nur über 150° C in das labile Wasserstoff-Segment und das Isozyanat-Segment als frei fließende Schmelze zu dissoziieren.

2. Die schmelzverarbeitbare Polymerzusammensetzung nach Anspruch 1, weiterhin umfassend die thermisch reversiblen sozyanat-labilen Urethanbindung-Wasserstoff-Quervernetzungen zwischen benachbarten Polymerketten.

3. Die schmelzverarbeitbare Polymerzusammensetzung nach Anspruch 1, **dadurch gekennzeichnet, daß** die Isozyanat-labile Urethanbindung-Wasserstoff-backbone-Verbindung an eine Aryl-Gruppe, eine Alkyl-Gruppe, eine Aryl- und eine Alkyl-Gruppe oder nur Aryl-Gruppen gebunden ist.

4. Die schmelzverarbeitbare Polymerzusammensetzung nach Anspruch 1, weiterhin umfassend:

   (C) eine widerstandsfähig machende aliphatische Präpolymer-backbone-Gruppe mit einem labilen Wasserstoff-Segment, welche Umgebungs- oder Niedrigtemperaturflexibilität und Widerstandsfähigkeit der finalen Polymerzusammensetzung zur Verfügung stellt, charakterisiert als ein Polyol, ein Polykaprolakton-Diol, ein Polytetramethylenether-Glykol, ein polyaliphatisches Karbonat-Diol, ein Hydroxy-endständiger aliphatischer Polyester oder ein gesättigter Hydroxy-endständiger Phtalsäure-basierter Polyester.

5. Die schmelzverarbeitbare Polymerzusammensetzung nach Anspruch 1, wobei das Isozyanat-Segment als ein Toluol-Diisozyanat, ein Naphtalin-Diisozyanat, ein Phenyl-Diisozyanat oder ein Triisozyanat einschließlich einem Triisozyanat, das in situ aus einem Diisozyanat und einem Triol, so wie Trimethylpropan gebildet wird, charakterisiert ist.

6. Die schmelzverarbeitbare Polymerzusammensetzung nach Anspruch 1, **dadurch gekennzeichnet, daß** der aromatische' Polyester ein Bishydroquinonester der Isophtalsäure mit phenolischen Endgruppen oder ein Bis-paraacetoxyphenylester der Isophtalsäure, wobei die Azetat-Gruppen durch Parahydroxobenzoatgruppen ersetzt sind, ist; und der Polykarbonatoligomer aus Bisphenol A und Phosgen gebildet ist und phenolische Hydroxyl-Endgruppen hat.

7. Die Verwendung der Polymerzusammensetzung aus einem der Ansprüche 1-6 als ein heißes Schmelzklebemittel.

8. Ein Verfahren zum Bilden einer Zusammensetzung gemäß Anspruch 1, umfassend Umsetzen einer ersten Verbindung mit Isozyanat-Funktionalität wie definiert unter (B) in Anspruch 1 mit einer zweiten Verbindung mit labiler Wasserstoff-Funktionalität, wie definiert unter (A) in Anspruch 1.

9. Das Verfahren gemäß Anspruch 8, weiterhin **gekennzeichnet durch** den Schritt des Hinzufügens einer zusätzlichen labilen Wasserstoff-Verbindung, **dadurch** gekennzeichnet, daß sie ionische Funktionalität aufweist, die in der Lage ist, thermisch reversible ionische Bindungen zu bilden, vor der Hinzufügung der Verbindung mit Isozyanat-Funktionalität.

## EP 0 514 459 B1

**Revendications**

1. Composition polymère de polyuréthane de température élevée stable, pouvant être traitée à chaud comprenant :

    (A) un segment fonctionnel hydrogène labile choisi dans le groupe consistant en

        des carbonates aromatiques oligomères et des esters aromatiques oligomères avec des fonctionnalités aux extrémités hydroxyles phénoliques ayant des groupes terminaux hydrogènes labiles et un degré de polymérisation de 1 à 20 et

    (B) un segment fonctionnel isocyanate choisi dans le groupe consistant en

        un polyisocyanate oligomère, aromatique, aliphatique cycloaliphatique ou d'aralkyle comprenant de 6 à 100 atomes de carbone ayant des groupes terminaux isocyanates réactifs ;

    dans laquelle ledit segment hydrogène labile et ledit segment isocyanate sont liés par une liaison thermo-réversible du squelette de l'hydrogène de la liaison uréthane labile-isocyanate, et dans laquelle ladite liaison a la caractéristique de dissociation seulement à plus de 150° C dans ledit segment hydrogène labile et ledit segment isocyanate en tant que fondu de grande fluidité.

2. Composition polymère pouvant être traitée à chaud selon la revendication 1, comprenant en outre lesdites réticulations thermo-réversibles de l'hydrogène de la liaison uréthane labile-isocyanate entre des chaînes polymères voisines.

3. Composition polymère pouvant être traitée à chaud selon la revendication 1, **caractérisée en ce que** ladite liaison thermo-reversible du squelette de l'hydrogène de la liaison uréthane labile-isocyanate est liée à un groupe aryle, un groupe alkyle, un groupe aryle et un groupe alkyle, ou seulement à des groupes aryles.

4. Composition polymère pouvant être traitée à chaud selon la revendication 1 comprenant en outre

    (C) un groupe du squelette du prépolymère aliphatique durcissant ayant un segment hydrogène labile qui donne une flexibilité à température ambiante ou à faible température et un durcissement de la composition polymère finale caractérisée comme étant un polyol, un diol de polycaprolactone, un éther de polytétraméthylène glycol, un diol de carbonate polyaliphatique, un polyester aliphatique se terminant par un groupe hydroxy ou un polyester à base d'acide phtalique se terminant par un groupe hydroxy.

5. Composition polymère pouvant être traitée à chaud selon la revendication 1, dans laquelle ledit segment isocyanate est caractérisé comme étant un diisocyanate de toluène, un diisocyanate de naphtalène, un diisocyanate de phényle ou un triisocyanate comprenant un triisocyanate formé in situ à partir d'un diisocyanate et d'un triol tel que le triméthylolpropane.

6. Composition polymère pouvant être traitée à chaud selon la revendication 1, **caractérisée en ce que** ledit polyester aromatique est un ester de bishydroquinone de l'acide isophtalique avec des groupes terminaux phénoliques ou un ester bis-paraacétoxy-phényle de l'acide isophtalique avec les groupes acétates remplacés par des groupes parahydroxybenzoates ; et ledit oligomère de polycarbonate est formé à partir de bisphénol A et de phosgène et a des groupes terminaux hydroxyles phénoliques.

7. Utilisation de ladite composition polymère selon l'une quelconque des revendications 1 à 6 comme adhésifs à chaud

8. Procédé de formation d'une composition selon la revendication 1, comprenant l'étape consistant à faire réagir un premier composé avec une fonctionnalité isocyanate comme défini en (B) de la revendication 1 avec un deuxième composé ayant une fonctionnalité hydrogène labile comme défini en (A) de la revendication 1.

9. Procédé selon la revendication 8, **caractérisé en outre par** l'étape consistant à ajouter avant l'addition dudit composé ayant une fonctionnalité isocyanate, un composé hydrogène labile supplémentaire caractérisé comme ayant une fonctionnalité ionique capable de former des liaisons ionique thermo-réversibles.

**FIG. 1**

FIG. 2

**FIG. 3**

EP 0 514 459 B1

FIG. 4

FIG. 5